# EUROPÄISCHE PATENTSCHRIFT

(11) **EP 2 440 312 B1**
(45) Veröffentlichungstag und Bekanntmachung des Hinweises auf die Patenterteilung: **13.04.2016**
(21) Anmeldenummer: 10718029.1
(22) Anmeldetag: 16.04.2010
(51) Int. Cl.: B01D 53/22, C10L 3/10

(54) **VORRICHTUNG UND VERFAHREN ZUR AUFTRENNUNG EINES GASGEMISCHES**
DEVICE AND METHOD FOR SEPARATING A GAS MIXTURE
DISPOSITIF ET PROCÉDÉ DE SÉPARATION D'UN MÉLANGE GAZEUX

(30) Priorität: 10.06.2009 AT 9002009
(43) Veröffentlichungstag der Anmeldung: 18.04.2012
(73) Patentinhaber: Axiom Angewandte Prozeßtechnik Ges. m.b.H., 2443 Deutsch Brodersdorf (AT)
(72) Erfinder: SZIVACZ, Johannes, A-2484 Weigelsdorf (AT); HARASEK, Michael, A-1160 Wien (AT)
(74) Vertreter: Pawloy, Peter Michael
(86) Internationale Anmeldenummer: PCT/AT2010/000117
(87) Internationale Veröffentlichungsnummer: WO 2010/141963

(56) Entgegenhaltungen:
- EP-A1- 0 110 858
- EP-A2- 0 329 962
- WO-A1-99/06137
- DE-A1-102004 007 548
- FR-A1- 2 917 305
- GB-A- 2 005 152
- US-A- 3 208 197
- US-A- 4 130 403
- US-A- 5 032 148
- US-A- 5 064 446
- US-B1- 6 572 678
- AGRAWAL R ET AL: "Gas separation membrane cascades II. Two-compressor cascades" JOURNAL OF MEMBRANE SCIENCE, ELSEVIER SCIENTIFIC PUBL.COMPANY. AMSTERDAM, NL LNKD- DOI:10.1016/0376-7388(95)00273-1, Bd. 112, Nr. 2, 17. April 1996 (1996-04-17), Seiten 129-146, XP004041673 ISSN: 0376-7388

## Beschreibung

Die vorliegende Erfindung betrifft eine Vorrichtung und ein Verfahren zur Auftrennung eines Gasgemisches in Produktgas und Offgas mittels Gaspermeation.

Bei Gaspermeationsmembraneinheiten erfolgt die Trennung von Produktgas und Offgas mittels Permeation, wobei beispielsweise ein Produktgas-angereichertes Retentat und ein Offgas-angereichertes Permeat gewonnen werden können. Die Konzentrationen an Produktgas im Retentat und Offgas im Permeat sind von den jeweils angewendeten Prozess-Parametern abhängig, generell ist für eine erhöhte Produktgas-Qualität immer ein erhöhter Energieeinsatz erforderlich (höherer Druck, niedrigere Ausbeute in Bezug auf eingesetztes Feedgas, etc.). Verbesserte Verfahren zur Steigerung der Produktgas-Ausbeute oder zur effizienteren Nutzung von Energie im Zuge eines derartigen Verfahrens sind daher wünschenswert. Auch ist es wünschenswert, die bei der Errichtung einer Gaspermeationsanlage anfallenden Investitionskosten möglichst gering zu halten.

Bisher sind Vorrichtungen zur Auftrennung eines Gasgemisches in Produktgas und Offgas mittels Gaspermeation derart aufgebaut, dass das druckbeaufschlagte Feedgas in einer Membraneinheit in das Retentat und in das Permeat aufgetrennt werden, wobei beispielsweise das Retentat das Produktgas und das Permeat das Offgas enthält. Nachteil dieser einstufigen Lösung sind niedrige Produktgasqualität und niedrige Produktgasausbeute, die mit einem erhöhten Energiebedarf verbunden ist. Weiters ist diese Vorrichtung nur für sehr selektive Membranen wirtschaftlich einsetzbar.

Verbesserte Vorrichtungen zur Auftrennung eines Gasgemisches in Produktgas und Offgas mittels Gaspermeation sind derart aufgebaut, dass das Permeat einer ersten Membraneinheit druckbeaufschlagt als Feedgas für eine zweite Membraneinheit verwendet wird, wobei die Retentatströme der beiden Membraneinheiten das Produktgas und der Permeatstrom der zweiten Membraneinheit das Offgas enthalten. Der Anlage kann gegebenenfalls noch ein Verdichter vorgeschaltet werden, wenn das Feedgas nicht druckbeaufschlagt vorhanden ist. Der Vorteil dieser Vorrichtung ist eine verbesserte Produktgasausbeute. Nachteil dieser Lösung sind die weiterhin niedrige Produktgasqualität und ein aufgrund der erforderlichen Verdichtung des Gases für die zweite Membraneinheit erhöhter Energiebedarf. Weiters ist diese Vorrichtung nur für sehr selektive Membranen wirtschaftlich einsetzbar.

Weiters sind Vorrichtungen bekannt, wobei das Retentat einer ersten Membraneinheit als Feedgas einer zweiten Membraneinheit verwendet wird, das Permeat der zweiten Membraneinheit dem druckbeaufschlagten Feedgas der ersten Membraneinheit beigemischt wird, das Retentat der zweiten Membraneinheit als Produktgas und das Permeat der ersten Membraneinheit als Offgas abgezogen wird. Da hier das Permeat der zweiten Membraneinheit sozusagen im Kreislauf geführt wird, muss die Dimension der Anlage und aller nötigen Teile (Kompressoren, Leitungen, Membraneinheiten, Kälteabscheider, Schwefelfeinabscheider etc.) entsprechend dem Volumsstrom des im Kreislauf geführten Permeats der ersten Membraneinheit vergrößert werden. Bei einem angenommenen Volumsstrom an Feedgas von 100 m³/h und Beimischung von 80 m³/h an Permeat der zweiten Membraneinheit zu diesem Feedgas ergibt sich vor dem Kompressor ein Gesamtvolumsstrom von 180 m³/h, gemäß welchem die Anlage zu dimensionieren ist. Vorteil dieses Verfahren ist, dass eine höhere Ausbeute an Produktgas erzielt werden kann, auch können aufgrund der zweistufigen Ausführung weniger selektive Membranen eingesetzt werden, nachteilig ist dabei die um den Faktor 1,2 bis 2,5 nötige übergroße Auslegung der Anlage und ein aufgrund der Rückführung erhöhter Energiebedarf.

Die Aufgabe der vorliegenden Erfindung besteht daher darin, eine Vorrichtung und ein Verfahren zur Auftrennung eines Gasgemisches in Produktgas und Offgas mittels Gaspermeation zur Verfügung zu stellen, welches eine erhöhte Produktgas-Ausbeute und/ oder einen effizienteren Energieeinsatz ermöglicht.

Die Erfindung geht dabei von einer Vorrichtung zur Auftrennung eines Gasgemisches in Produktgas und Offgas mittels Gaspermeation mit mindestens zwei Membraneinheiten (1) und (2) und einem der ersten Membraneinheit (1) vorgeschalteten Verdichter (3) aus, welche Membraneinheiten (1) und (2) einen Gaseingang (1a, 2a), einen Retentatausgang (1b, 2b) und einen Permeatausgang (1c, 2c) aufweisen, wobei der Retentatausgang (1b) der ersten Membraneinheit (1) mit dem Gaseingang (2a) der zweiten Membraneinheit (2), der Permeatausgang (2c) der zweiten Membraneinheit (2) ansaugseitig mit dem Verdichter (3) bzw. der in den Verdichter führenden Gaszufuhr und der Verdichter (3) mit dem Gaseingang (1a) der ersten Membraneinheit (1) leitungsmäßig verbunden ist, Produktgas über Retentatausgang (2b) und Offgas über Permeatausgang (1c) erhalten wird.

Bei einer solchen Vorrichtung ist erfindungsgemäß vorgesehen, dass der Permeatausgang (4c) einer vorgeschalteten Membraneinheit (4) mit der Gaszufuhr des Verdichters (3) leitungsmäßig verbunden ist, wobei der Membraneinheit (4) noch mindestens eine weitere Membraneinheit (5) durch leitungsmäßige Verbindung des Retentatausganges (5b) der weiteren Membraneinheit (5) mit dem Gaseingang (4a) der Membraneinheit (4) vorgeschaltet ist und zusätzliches Produktgas über Retentatausgang (4b) und zusätzliches Offgas über Permeatausgang (5c) erhalten wird. Durch eine solche Vorrichtung können die feedseitig ersten beiden Membraneinheiten (5,6) kleiner ausgelegt werden als im Stand der Technik, ein Austausch dieser beiden, erfahrungsgemäß am schnellsten kontaminierten Membraneinheiten ist somit billiger. Die anderen beiden Membraneinheiten (1, 2) haben eine praktisch unbegrenzte Standzeit, da alle Verunreinigungen bereits ausgeschieden wurden. Günstig ist hiebei, wenn der Retentatausgang (4b) der Membraneinheit (4) mit dem Retentatausgang (2b) der Membraneinheit (2) zum gemeinsamen Abzug von Produktgas leitungsmäßig verbunden ist. Die Kombination der beiden Produktgasleitungen bringt dabei anlagetechnische Vorteile, weil nach außen nur eine Produktgasleitung geführt werden muss und beispielsweise zur Qualitätskontrolle nur ein Produktgasstrom analysiert werden muss.

Auch ist günstig, wenn der Permeatausgang (5c) der Membraneinheit (5) mit dem Permeatausgang (1c) der Membraneinheit (1) zum gemeinsamen Abzug von Offgas leitungsmäßig verbunden ist. Auch die Kombination der beiden Offgasleitungen bringt anlagetechnische Vorteile, weil nach außen nur eine Offgasleitung geführt werden muss.

Gemäß einer bevorzugten Ausführungsform wird dem Gaseingang (5a) der Membraneinheit (5) ebenfalls ein Verdichter vorgeschaltet. Durch das Vorsehen eines weiteren Verdichters (etwa wenn das Feedgas nicht unter Druck bereitsteht) ist ein kontinuierlicher Mengenstrom möglich und es wird die erforderliche Druckbeaufschlagung des Feedgases sicher gestellt.

Eine besonders bevorzugte Ausführungsform der vorliegenden Erfindung sieht vor, dass die beiden Membraneinheiten (1) und (2) sowie die beiden Membraneinheiten (4) und (5) jeweils durch eine Membraneinheit (6) bzw. (7) mit einem Gaseingang (6a) bzw. (7a), einem Retentatausgang (6b) bzw. (7b) und zwei Permeatausgängen (6c, 6c') bzw. (7c, 7c') gebildet werden, wobei der Permeatausgang (6c') der Membraneinheit (6) ansaugseitig mit dem Verdichter (3) bzw. der in den Verdichter führenden Gaszufuhr und der Verdichter (3) mit dem Gaseingang (6a) der Membraneinheit (6) leitungsmäßig verbunden ist, Produktgas über Retentatausgang (6b) und Offgas über Permeatausgang (6c) erhalten wird, die Gaszufuhr des Verdichters (3) mit dem Permeatausgang (7c') der vorgeschalteten Membraneinheit (7) leitungsmäßig verbunden ist, und zusätzliches Produktgas über Retentatausgang (7b) sowie zusätzliches Offgas über Permeatausgang (7c) erhalten wird. Durch diese Anordnung ist es möglich, in jeder Membraneinheit mehrere (zumindest zwei) Abtrennungsstufen vorzusehen und gleichzeitig die Anzahl der leitungsmäßigen Verbindungen und dadurch kostenintensive Investitionen innerhalb der Vorrichtung zu vermindern.

Weiters wird dabei erfindungsgemäß vorgesehen, dass die Permeaträume der Membraneinheiten (6) und (7) jeweils im Bereich zwischen den Permeatausgängen (6c, 6c') und (7c, 7c') durch eine Wand (6d) und (7d) abgetrennt sind. Die Abtrennung verhindert dabei, dass sich die beiden Permeatströme (welche unterschiedliche Konzentrationen an Offgas und Produktgas aufweisen) wieder miteinander vermischen, bevor sie aus den jeweiligen Permeatausgängen austreten. Zusätzlich wird durch diese Abtrennungen erreicht, dass die Permeaträume in einem beliebigen Verhältnis aufgeteilt werden können und damit die gewünschten Membranflächen den einzelnen Permeaträumen beliebig zugeordnet werden können. Auch eine mehrfache Auftrennung der Permeaträume ist denkbar, wobei durch selektive Kombination der verschiedenen Permeatströme die Zusammensetzung der beiden Offgasströme hinsichtlich ihrer Konzentrationen an Offgas und Produktgas beeinflusst werden kann.

Günstig ist dabei, wenn der Retentatausgang (7b) der Membraneinheit (7) mit dem Retentatausgang (6b) der Membraneinheit (6) zum gemeinsamen Abzug von Produktgas leitungsmäßig verbunden ist. Auch hier bringt die Kombination der beiden Produktgasleitungen anlagetechnische Vorteile, weil nach außen nur eine Produktgasleitung geführt werden muss und beispielsweise zur Qualitätskontrolle nur ein Produktgasstrom analysiert werden muss.

Vorzugsweise ist dem Gaseingang (7a) der Membraneinheit (7) ebenfalls ein Verdichter vorgeschaltet. Durch das Vorsehen eines weiteren Verdichters (etwa wenn das Feedgas nicht unter Druck bereitsteht) ist ein kontinuierlicher Mengenstrom möglich und es wird die erforderliche Druckbeaufschlagung des Feedgases sichergestellt.

Gemäß einem weiteren Aspekt der vorliegenden Erfindung wird die genannte Vorrichtung zur Trennung eines hauptsächlich aus CH₄/CO₂ bestehenden Gasgemisches in CH₄ als Produktgas und CO₂ als Offgas eingesetzt.

Noch ein weiterer Aspekt der vorliegenden Erfindung betrifft ein Verfahren zur Auftrennung eines Gasgemisches in Produktgas und Offgas mittels Gaspermeation, wobei das Retentat einer ersten Membraneinheit (1) als Feedgas einer zweiten Membraneinheit (2) verwendet wird, das Permeat der zweiten Membraneinheit (2) dem druckbeaufschlagten Feedgas der ersten Membraneinheit (1) beigemischt wird, das Retentat der zweiten Membraneinheit (2) als Produktgas und das Permeat der ersten Membraneinheit (1) als Offgas abgezogen wird, wobei erfindungsgemäß vorgesehen ist, dass als Feedgas der ersten Membraneinheit (1) das Permeat einer vorgeschalteten Membraneinheit (4) verwendet wird, für welche das Retentat einer weiteren vorgeschalteten Membraneinheit (5) als Feedgas verwendet wird, wobei das Retentat der Membraneinheit (4) als zusätzliches Produktgas und das Permeat der Membraneinheit (5) als zusätzliches Offgas gewonnen wird.

Günstig ist dabei, wenn das Retentat der Membraneinheiten (2) und (4) gemeinsam als Produktgas abgezogen wird.

Vorzuziehen ist auch, wenn das Permeat der Membraneinheiten (1) und (5) gemeinsam als Offgas abgezogen wird.

Weiters ist günstig, wenn das Feedgas der Membraneinheit (5) ebenfalls druckbeaufschlagt wird.

Vorzugsweise werden als die beiden Membraneinheiten (1) und (2) sowie die beiden Membraneinheiten (4) und (5) jeweils eine Membraneinheit (6) bzw. (7) mit zwei Permeatausgängen (6c, 6c') bzw. (7c, 7c') verwendet, wobei das an Produktgas reichere bzw. an Offgas ärmere der beiden Permeate in der Membraneinheit (6) unter Druckbeaufschlagung im Kreislauf geführt und das an Prodüktgas reichere bzw. an Offgas ärmere der beiden Permeate der Membraneinheit (7) als Feedgas für die Membraneinheit (6) verwendet wird, wobei Produktgas als Retentat der Membraneinheiten (6) und (7) sowie Offgas als das andere Permeat der Membraneinheiten (6) und (7) gewonnen wird.

Günstig ist dabei, wenn das Retentat der Membraneinheiten (6) und (7) gemeinsam als Produktgas abgezogen wird.

Vorzugsweise wird das an Offgas reichere bzw. an Produktgas ärmere der beiden Permeate der Membraneinheiten (6) und (7) gemeinsam als Offgas abgezogen.

Weiters ist günstig, wenn das Feedgas der Membraneinheit (7) ebenfalls druckbeaufschlagt wird. Die Vorteile dieser Ausführungsformen des erfindungsgemäßen Verfahrens wurden bereits bei der jeweiligen Beschreibung der zugehörigen Vorrichtung erläutert.

Gemäß einem letzten Aspekt der vorliegenden Erfindung wird das erfindungsgemäße Verfahren zur Trennung eines hauptsächlich aus CH₄/CO₂ bestehenden Gasgemisches in CH₄ als Produktgas und CO₂ als Offgas verwendet.

Die vorliegende Erfindung wird nun unter Bezugnahme auf die beiliegenden Figuren näher erklärt. Dabei zeigen:
Fig. 1 ein Blockschaltbild einer erfindungsgemäßen Vorrichtung mit zwei Membraneinheiten (1) und (2), einem der ersten Membraneinheit (1) vorgeschalteten Kompressor bzw. Verdichter (3) und zwei weiteren Membraneinheiten (4) und (5),
Fig. 2 ein Blockschaltbild einer erfindungsgemäßen Vorrichtung mit zwei Membraneinheiten (6 und 7), einem der Membraneinheit (6) vorgeschalteten Kompressor (3), wobei jede Membraneinheit zwei Permeatausgänge aufweist;
Fig. 3 eine Volumenstrombilanz der Vorrichtung gemäß Fig. 1; sowie
Fig. 4 und 5 Volumenstrombilanzen von Vorrichtungen gemäß dem Stand der Technik.

Alle Membräneinheiten weisen einen Gaseingang (1a, 2a, 4a, 5a), einen Retentatausgang (1b, 2b, 4b, 5b) und einen Permeatausgang (1c, 2c, 4c, 5c) auf, wobei der Retentatausgang (1b) der ersten Membraneinheit (1) mit dem Gaseingang (2a) der zweiten Membraneinheit (2) verbunden ist. Da Produktgas hier als Retentat gewonnen wird, bedeutet dies, dass von der Membraneinheit (1) Produktgas zur weiteren Reinigung als Feedgas in die Membraneinheit (2) verbracht wird. In der Membraneinheit (2) anfallendes Offgas wird dann über der Permeatausgang (2c) dem Verdichter (3) bzw. der in den Verdichter führenden Gaszufuhr ansaugseitig zugeführt, sodass über Verdichter (3), Gaseingang (1a), Retentatausgang (1b), Gaseingang (2a) und Permeatausgang (2c) in der zweiten Membraneinheit (2) abgetrenntes Offgas im Kreislauf geführt wird. Dadurch erhöht sich zwar der Massestrom in den Membraneinheiten (1) und (2), im Unterschied zum Stand der Technik wird aber der Verdichter (3) mit Permeat aus dem Permeatausgang (4c) einer vorgeschalteten Membraneinheit (4) gespeist, wobei der Membraneinheit (4) noch mindestens eine weitere Membraneinheit (5) derart vorgeschaltet ist, dass der Retentatausgang (5b) mit dem Gaseingang (4a) verbunden ist. Produktgas wird dabei über die Retentatausgänge (2b) und (4b) gesammelt und abgeführt, Offgas über die Permeatausgänge (1c) und (5c).

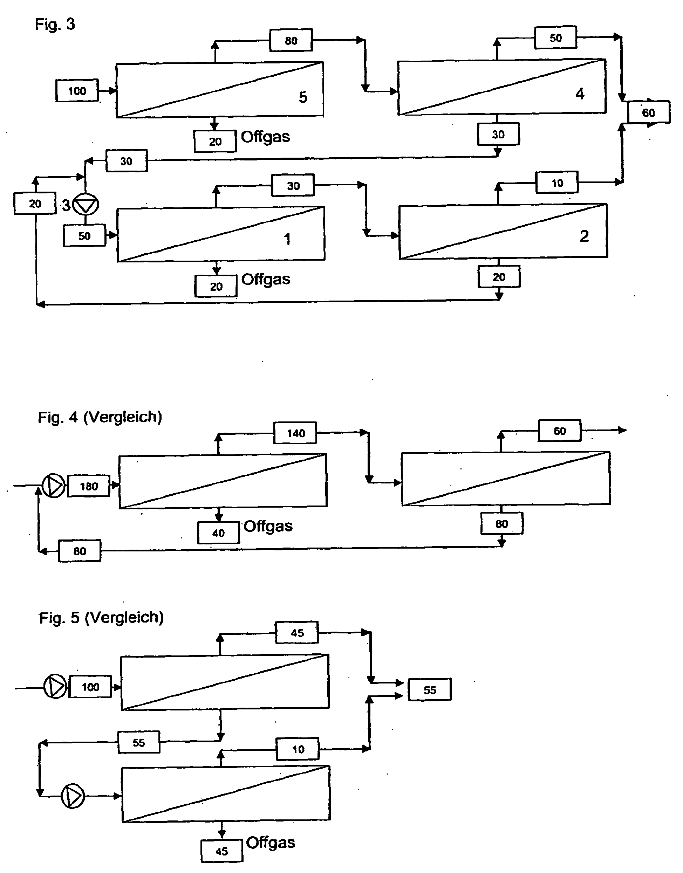

Bei Betrachtung der Volumenstrombilanz einer derartigen erfindungsgemäßen Ausführungsform (Fig. 3) fällt auf, dass bei einem angenommenen Eingangsstrom von 100 m³/h insgesamt 60 m³/h Produktgas und 40 m³/h Offgas gewonnen werden können, während bei den Verfahren des Standes der Technik 60 m³/h Produktgas und 40 m³/h Offgas (Fig. 4) bzw. 55 m³/h Produktgas und 45 m³/h Offgas (Fig. 5) anfallen. Im Vergleich mit dem Stand der Technik gemäß Fig. 4 bedeutet dies weiters, dass beim erfindungsgemäßen Verfahren die Membraneinheiten (5) und (4) auf einen Produktstrom von 100 m³/h bzw. 80 m³/h ausgelegt werden können, während die Membraneinheiten (1) und (2) überhaupt nur für 50 m³/h bzw. 30 m³/h dimensioniert sein müssen. Demgegenüber müssen die Membraneinheiten (sowie alle anderen nicht gezeigten Anlageteile, wie Leitungen, Membraneinheiten, Kälteabscheider, Schwefelfeinabscheider etc.) in Fig. 4 für 180 m³/h bzw. 140 m³/h dimensioniert sein. Es ist also klar ersichtlich, dass durch die Vorschaltung von mindestens zwei Membraneinheiten das Verfahren des Standes der Technik in wesentlich kleineren Dimensionen und gleichen Ausbeuten durchgeführt werden kann.

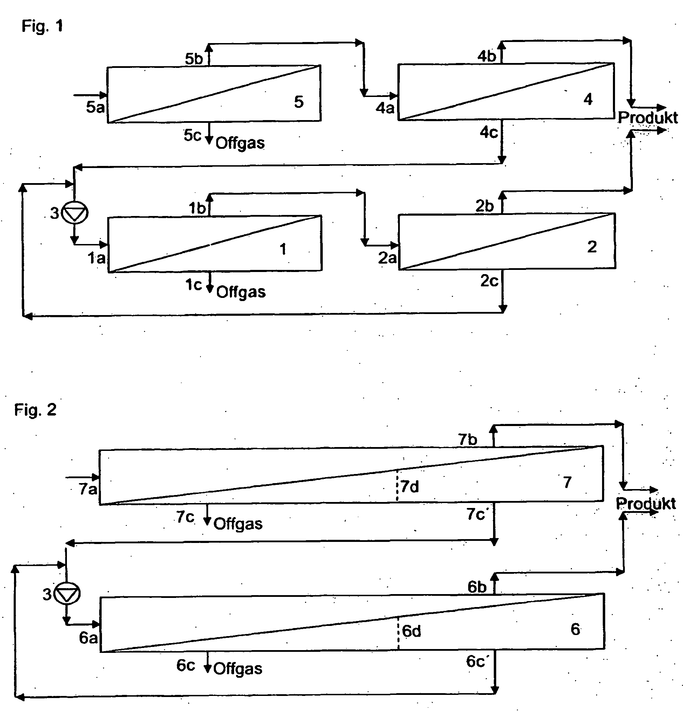

In Fig. 2 wird eine weitere erfindungsgemäße Ausführungsform gezeigt, wobei die beiden Membraneinheiten (1) und (2) durch eine Membraneinheit (6) bzw. (7) mit zwei Permeatauslässen (6c, 6c') bzw. (7c, 7c') ersetzt wurde. Die Membraneinheiten (6, 7) weisen darüber hinaus je einen Gaseingang (6a, 7a), einen Retentatausgang (6b, 7b) und gegebenenfalls eine Trennwand (6d, 7d) im Permeatraum auf, um die Permeatströme unterschiedlicher Konzentration zu trennen.

## Patentansprüche

1. Vorrichtung zur Auftrennung eines Gasgemisches in Produktgas und Offgas mittels Gaspermeation mit mindestens zwei Membraneinheiten (1) und (2) und einem der ersten Membraneinheit (1) vorgeschalteten Verdichter (3), welche Membraneinheiten (1) und (2) einen Gaseingang (1a, 2a), einen Retentatausgang (1b, 2b) und einen Permeatausgang (1c, 2c) aufweisen, wobei der Retentatausgang (1b) der ersten Membraneinheit (1) mit dem Gaseingang (2a) der zweiten Membraneinheit (2), der Permeatausgang (2c) der zweiten Membraneinheit (2) ansaugseitig mit dem Verdichter (3) bzw. der in den Verdichter führenden Gaszufuhr und der Verdichter (3) mit dem Gaseingang (1a) der ersten Membraneinheit (1) leitungsmäßig verbunden ist, Produktgas über Retentatausgang (2b) und Offgas über Permeatausgang (1c) erhalten wird, **dadurch gekennzeichnet, dass** der Permeatausgang (4c) einer vorgeschalteten Membraneinheit (4) mit der Gaszufuhr des Verdichters (3) leitungsmäßig verbunden ist, wobei der Membraneinheit (4) noch mindestens eine weitere Membraneinheit (5) durch leitungsmäßige Verbindung des Retentatausganges (5b) der weiteren Membraneinheit (5) mit dem Gaseingang (4a) der Membraneinheit (4) vorgeschaltet ist und zusätzliches Produktgas über Retentatausgang (4b) und zusätzliches Offgas über Permeatausgang (5c) erhalten wird.

2. Vorrichtung nach Anspruch 1, **dadurch gekennzeichnet, dass** der Retentatausgang (4b) der Membraneinheit (4) mit dem Retentatausgang (2b) der Membraneinheit (2) zum gemeinsamen Abzug von Produktgas leitungsmäßig verbunden ist.

3. Vorrichtung nach Anspruch 1 oder 2, **dadurch gekennzeichnet, dass** der Permeatausgang (5c) der Membraneinheit (5) mit dem Permeatausgang (1c) der Membraneinheit (1) zum gemeinsamen Abzug von Offgas leitungsmäßig verbunden ist.

4. Vorrichtung nach einem der Ansprüche 1 bis 3, **dadurch gekennzeichnet, dass** dem Gaseingang (5a) der Membraneinheit (5) ebenfalls ein Verdichter vorgeschaltet ist.

5. Vorrichtung nach Anspruch 1, **dadurch gekennzeichnet, dass** die beiden Membraneinheiten (1) und (2) sowie die beiden Membraneinheiten (4) und (5) jeweils durch eine Membraneinheit (6) bzw. (7) mit einem Gaseingang (6a) bzw. (7a), einem Retentatausgang (6b) bzw. (7b) und zwei Permeatausgängen (6c, 6c') bzw. (7c, 7c') gebildet werden, wobei der Permeatausgang (6c') der Membraneinheit (6) ansaugseitig mit dem Verdichter (3) bzw. der in den Verdichter führenden Gaszufuhr und der Verdichter (3) mit dem Gaseingang (6a) der Membraneinheit (6) leitungsmäßig verbunden ist, Produktgas über Retentatausgang (6b) und Offgas über Permeatausgang (6c) erhalten wird, die Gaszufuhr des Verdichters (3) mit dem Permeatausgang (7c') der vorgeschalteten Membraneinheit (7) leitungsmäßig verbunden ist, und zusätzliches Produktgas über Retentatausgang (7b) sowie zusätzliches Offgas über Permeatausgang (7c) erhalten wird.

6. Vorrichtung nach Anspruch 5, **dadurch gekennzeichnet, dass** die Permeaträume der Membraneinheiten (6) und (7) jeweils im Bereich zwischen den Permeatausgängen (6c, 6c') und (7c, 7c') durch eine Wand (6d) und (7d) abgetrennt sind.

7. Vorrichtung nach einem der Ansprüche 5 oder 6, **dadurch gekennzeichnet, dass** der Retentatausgang (7b) der Membraneinheit (7) mit dem Retentatausgang (6b) der Membraneinheit (6) zum gemeinsamen Abzug von Produktgas leitungsmäßig verbunden ist.

8. Vorrichtung nach einem der Ansprüche 5 bis 7, **dadurch gekennzeichnet, dass** der Permeatausgang (7c) der Membraneinheit (7) mit dem Permeatausgang (6c) der Membraneinheit (6) zum gemeinsamen Abzug von Offgas leitungsmäßig verbunden ist.

9. Vorrichtung nach einem der Ansprüche 5 bis 8, **dadurch gekennzeichnet, dass** dem Gaseingang (7a) der Membraneinheit (7) ebenfalls ein Verdichter vorgeschaltet ist.

10. Verwendung einer Vorrichtung nach einem der Ansprüche 1 bis 9 zur Trennung eines hauptsächlich aus CH₄/CO₂ bestehenden Gasgemisches in CH₄ als Produktgas und CO₂ als Offgas.

11. Verfahren zur Auftrennung eines Gasgemisches in Produktgas und Offgas mittels Gaspermeation, wobei das Retentat einer ersten Membraneinheit (1) als Feedgas einer zweiten Membraneinheit (2) verwendet wird, das Permeat der zweiten Membraneinheit (2) dem druckbeaufschlagten Feedgas der ersten Membraneinheit (1) beigemischt wird, das Retentat der zweiten Membraneinheit (2) als Produktgas und das Permeat der ersten Membraneinheit (1) als Offgas abgezogen wird, **dadurch gekennzeichnet, dass** als Feedgas der ersten Membraneinheit (1) das Permeat einer vorgeschalteten Membraneinheit (4) verwendet wird, für welche das Retentat einer weiteren vorgeschalteten Membraneinheit (5) als Feedgas verwendet wird, wobei das Retentat der Membraneinheit (4) als zusätzliches Produktgas und das Permeat der Membraneinheit (5) als zusätzliches Offgas gewonnen wird.

12. Verfahren nach Anspruch 11, **dadurch gekennzeichnet, dass** das Retentat der Membraneinheiten (2) und (4) gemeinsam als Produktgas abgezogen wird.

13. Verfahren nach Anspruch 11 oder 12, **dadurch gekennzeichnet, dass** das Permeat der Membraneinheiten (1) und (5) gemeinsam als Offgas abgezogen wird.

14. Verfahren nach einem der Ansprüche 11 bis 13, **dadurch gekennzeichnet, dass** das Feedgas der Membraneinheit (5) ebenfalls druckbeaufschlagt wird.

15. Verfahren nach Anspruch 11, **dadurch gekennzeichnet, dass** als die beiden Membraneinheiten (1) und (2) sowie die beiden Membraneinheiten (4) und (5) jeweils eine Membraneinheit (6) bzw. (7) mit zwei Permeatausgängen (6c, 6c') bzw. (7c, 7c') verwendet wird, wobei das an Produktgas reichere bzw. an Offgas ärmere der beiden Permeate in der Membraneinheit (6) unter Druckbeaufschlagung im Kreislauf geführt und das an Produktgas reichere bzw. an Offgas ärmere der beiden Permeate der Membraneinheit (7) als Feedgas für die Membraneinheit (6) verwendet wird, wobei Produktgas als Retentat der Membraneinheiten (6) und (7) sowie Offgas als das andere Permeat der Membraneinheiten (6) und (7) gewonnen wird.

16. Verfahren nach Anspruch 15, **dadurch gekennzeichnet, dass** das Retentat der Membraneinheiten (6) und (7) gemeinsam als Produktgas abgezogen wird.

17. Verfahren nach Anspruch 15 oder 16, **dadurch gekennzeichnet, dass** das an Offgas reichere bzw. an Produktgas ärmere der beiden Permeate der Membraneinheiten (6) und (7) gemeinsam als Offgas abgezogen wird.

18. Verfahren nach einem der Ansprüche 15 bis 17, **dadurch gekennzeichnet, dass** das Feedgas der Membraneinheit (7) ebenfalls druckbeaufschlagt wird.

## Claims

1. A device for separating a gas mixture into product gas and offgas by way of gas permeation, with at least two membrane units (1) and (2) and a compressor (3) placed upstream from the first membrane unit (1), with the membrane units (1) and (2) exhibiting a gas inlet (1a, 2a), a retentate outlet (1b, 2b) and a permeate outlet (1c, 2c), wherein the retentate outlet (1b) of the first membrane unit (1) is connected to the gas inlet (2a) of the second membrane unit (2), the permeate outlet (2c) of the second membrane unit (2) is connected on the intake side with the condenser (3) or the gas supply leading into the condenser, and the condenser (3) is connected with the gas inlet (1a) of the first membrane unit (1), all by way of lines, product gas is obtained via the retentate outlet (2b), and offgas is obtained via the permeate outlet (1c), **characterized in that** the permeate outlet (4c) of an upstream membrane unit (4) is connected with the gas supply of the compressor (3) by way of a line, wherein at least one other membrane unit (5) is placed upstream from the membrane unit (4) by connecting the retentate outlet (5b) of the additional membrane unit (5) with the gas inlet (4a) of the membrane unit (4) by way of a line, and additional product gas is obtained via the retentate outlet (4b), and additional offgas is obtained via the permeate outlet (5c).

2. The device according to claim 1, **characterized in that** the retentate outlet (4b) of the membrane unit (4) is connected with the retentate outlet (2b) of the membrane unit (2) by way of a line so as to jointly remove product gas.

3. The device according to claim 1 or 2, **characterized in that** the permeate outlet (5c) of the membrane unit (5) is connected with the permeate outlet (1c) of the membrane unit (1) by way of a line so as to jointly remove offgas.

4. The device according to one of claims 1 to 3, **characterized in that** a compressor is also placed upstream from the gas inlet (5a) of the membrane unit (5).

5. The device according to claim 1, **characterized in that** the two membrane units (1) and (2) as well as the two membrane units (4) and (5) are each formed by a membrane unit (6) or (7) with a gas inlet (6a) or (7a), a retentate outlet (6b) or (7b) and two permeate outlets (6c, 6c') or (7c, 7c'), wherein the permeate outlet (6c') of the membrane unit (6) is connected on the intake side with the compressor (3) or the gas supply leading into the compressor, and the compressor (3) is connected with the gas inlet (6a) of the membrane unit (6), all by way of lines, product gas is obtained via the retentate outlet (6b), offgas is obtained via the permeate outlet (6c), the gas supply of the compressor (3) is connected with the permeate outlet (7c') of the upstream membrane unit (7) by way of a line, additional product gas is obtained via the retentate outlet (7b), and additional offgas is obtained via the permeate outlet (7c).

6. The device according to claim 5, **characterized in that** the permeate spaces of the membrane units (6) and (7) are each separated in the region between the permeate outlets (6c, 6c') and (7c, 6c') by a wall (6d) and (7d).

7. The device according to one of claims 5 or 6, **characterized in that** the retentate outlet (7b) of the membrane unit (7) is connected with the retentate outlet (6b) of the membrane unit (6) by way of a line so as to jointly remove product gas.

8. The device according to one of claims 5 to 7, **characterized in that** the permeate outlet (7c) of the membrane unit (7) is connected with the permeate outlet (6c) of the membrane unit (6) by way of a line so as to jointly remove offgas.

9. The device according to one of claims 5 to 8, **characterized in that** compressor is also placed upstream from the gas inlet (7a) of the membrane unit (7).

10. Use of a device according to one of claims 1 to 9 for separating a gas mixture consisting primarily of CH /CO into CH as the product 4 2 4 gas and CO as the offgas. 2

11. A method for separating a gas mixture into product gas and offgas by way of gas permeation, wherein the retentate of a first membrane unit (1) is used as the feed gas of a second membrane unit (2), the permeate of the second membrane unit (2) is mixed with the pressurized feed gas of the first membrane unit (1), the retentate of the second membrane unit (2) is removed as the product gas, and the permeate of the first membrane unit (1) is removed as the offgas, **characterized in that** the permeate of an upstream membrane unit (4) is used as the feed gas of the first membrane unit (1), for which the retentate of another upstream membrane unit (5) is used as the feed gas, wherein the retentate of the membrane unit (4) is obtained as the additional product gas, and the permeate of the membrane unit (5) is obtained as the additional offgas.

12. The method according to claim 11, **characterized in that** the retentate of the membrane units (2) and (4) is jointly removed as the product gas.

13. The method according to claim 11 or 12, **characterized in that** the permeate of the membrane units (1) and (5) is jointly removed as the offgas.

14. The method according to one of claims 11 to 13, **characterized in that** the feed gas of the membrane unit (5) is also pressurized.

15. The method according to claim 11, **characterized in that** a respective membrane unit (6) or (7) with two permeate outlets (6c, 6c') or (7c, 7c') is used as the two membrane units (1) and (2) as well as the two membrane units (4) and (5), wherein the one of the two permeates with more product gas or less offgas in the membrane unit (6) is pressurized and circulated, while the other of the two permeates with more product gas or less offgas in the membrane unit (7) is used as a feed gas for the membrane unit (6), wherein product gas is obtained as the retentate of the membrane units (6) and (7), and offgas is obtained as the other permeate of the membrane units (6) and (7).

16. The method according to claim 15, **characterized in that** the retentate of the membrane units (6) and (7) is jointly removed as the product gas.

17. The method according to claim 15 or 16, **characterized in that** the one of the two permeates with more offgas or less product gas in the membrane units (6) and (7) is jointly removed as offgas.

18. The method according to claim 15 to 17, **characterized in that** the feed gas of the membrane unit (7) is also pressurized.

## Revendications

1. Dispositif pour séparer ou fractionner par perméation gazeuse un mélange de gaz en un gaz de production et en un gaz d'échappement, comprenant au moins deux unités à membrane (1) et (2) et un compresseur (3) placé en amont de la première unité à membrane (1), lesdites unités à membrane (1) et (2) présentant une entrée de gaz (1a, 2a), une sortie de rétentat (1b, 2b) et une sortie de perméat (1c, 2c), dispositif
dans lequel la sortie de rétentat (1b) de la première unité à membrane (1) est reliée par une conduite à l'entrée de gaz (2a) de la deuxième unité à membrane (2), la sortie de perméat (2c) de la deuxième unité à membrane (2) au côté aspiration du compresseur (3) ou à l'alimentation en gaz menant au compresseur, et le compresseur (3) à l'entrée de gaz (1a) de la première unité à membrane (1), du gaz de production étant obtenu par l'intermédiaire de la sortie de rétentat (2b) et du gaz d'échappement par l'intermédiaire de la sortie de perméat (1c),
**caractérisé en ce que** la sortie de perméat (4c) d'une unité à membrane (4) placée en amont, est reliée par une conduite à l'alimentation en gaz du compresseur (3), au moins encore une unité à membrane supplémentaire (5) étant montée en amont de l'unité à membrane (4) par une liaison par une conduite de la sortie de rétentat (5b) de ladite unité à membrane supplémentaire (5) à l'entrée de gaz (4a) de l'unité à membrane (4), et du gaz de production supplémentaire étant obtenu par l'intermédiaire de la sortie de rétentat (4b), et du gaz d'échappement supplémentaire par l'intermédiaire de la sortie de perméat (5c).

2. Dispositif selon la revendication 1, **caractérisé en ce que** la sortie de rétentat (4b) de l'unité à membrane (4) est reliée par une conduite à la sortie de rétentat (2b) de l'unité à membrane (2), pour le soutirage commun de gaz de production.

3. Dispositif selon la revendication 1 ou la revendication 2, **caractérisé en ce que** la sortie de perméat (5c) de l'unité à membrane (5) est reliée par une conduite à la sortie de perméat (1c) de l'unité à membrane (1) pour le soutirage commun de gaz d'échappement.

4. Dispositif selon l'une des revendications 1 à 3 **caractérisé en ce qu'**en amont de l'entrée de gaz (5a) de l'unité à membrane (5) est également monté un compresseur.

5. Dispositif selon la revendication 1, **caractérisé en ce que** les deux unités à membrane (1) et (2) ainsi que les deux unités à membrane (4) et (5) sont formées chacune par une unité à membrane (6) et respectivement (7) comprenant une entrée de gaz (6a) et respectivement (7a), une sortie de rétentat (6b) et respectivement (7b) et deux sorties de perméat (6c, 6c') et respectivement (7c, 7c'), dispositif dans lequel la sortie de perméat (6c') de l'unité à membrane (6) est reliée par une conduite au côté aspiration du compresseur (3) ou à l'alimentation en gaz menant au compresseur, et le compresseur (3) est relié par une conduite à l'entrée de gaz (6a) de l'unité à membrane (6), du gaz de production est obtenu par l'intermédiaire de la sortie de rétentat (6b) et du gaz d'échappement par l'intermédiaire de la sortie de perméat (6c), l'alimentation en gaz du compresseur (3) est reliée par une conduite à la sortie de perméat (7c') de l'unité à membrane (7) montée en amont, et du gaz de production supplémentaire est obtenu par l'intermédiaire de la sortie de rétentat (7b), ainsi que du gaz d'échappement supplémentaire par l'intermédiaire de la sortie de perméat (7c).

6. Dispositif selon la revendication 5, **caractérisé en ce que** les chambres de perméat des unités à membrane (6) et (7) sont subdivisées chacune respectivement entre les sorties de perméat (6c, 6c') et (7c, 7c'), par une paroi (6d) et (7d).

7. Dispositif selon l'une des revendications 5 ou 6, **caractérisé en ce que** la sortie de rétentat (7b) de l'unité à membrane (7) est reliée par une conduite à la sortie de rétentat (6b) de l'unité à membrane (6), pour le soutirage commun de gaz de production.

8. Dispositif selon l'une des revendications 5 à 7, **caractérisé en ce que** la sortie de perméat (7c) de l'unité à membrane (7) est reliée par une conduite à la sortie de perméat (6c) de l'unité à membrane (6), pour le soutirage commun de gaz d'échappement.

9. Dispositif selon l'une des revendications 5 à 8, **caractérisé en ce qu'**en amont de l'entrée de gaz (7a) de l'unité à membrane (7), est également monté un compresseur.

10. Utilisation d'un dispositif selon l'une des revendications 1 à 9, pour la séparation ou le fractionnement d'un mélange de gaz essentiellement constitué de CH₄/CO₂, en CH₄ en tant que gaz de production et en CO₂ en tant que gaz d'échappement.

11. Procédé pour séparer ou fractionner par perméation gazeuse un mélange de gaz en un gaz de production et en un gaz d'échappement, d'après lequel le rétentat d'une première unité à membrane (1) est utilisé en tant que gaz d'alimentation d'une deuxième unité à membrane (2), le perméat de la deuxième unité à membrane (2) est additionné et mélangé au gaz d'alimentation sous pression de la première unité à membrane (1), le rétentat de la deuxième unité à membrane (2) est soutiré en tant que gaz de production et le perméat de la première unité à membrane (1) est soutiré en tant que gaz d'échappement, **caractérisé en ce que** concernant le gaz d'alimentation de la première unité à membrane (1), on utilise le perméat d'une unité à membrane (4) montée en amont, pour laquelle on utilise en guise de gaz d'alimentation, le rétentat d'une unité à membrane (5) supplémentaire montée en amont, le rétentat de l'unité à membrane (4) étant récupéré en tant que gaz de production supplémentaire et le perméat de l'unité à membrane (5) en tant que gaz d'échappement supplémentaire.

12. Procédé selon la revendication 11, **caractérisé en ce que** le rétentat des unités à membrane (2) et (4) est soutiré en commun en tant que gaz de production.

13. Procédé selon la revendication 11 ou la revendication 12, **caractérisé en ce que** le perméat des unités à membrane (1) et (5) est soutiré en commun en tant que gaz d'échappement.

14. Procédé selon l'une des revendications 11 à 13, **caractérisé en ce que** le gaz d'alimentation de l'unité à membrane (5) est également mis sous pression.

15. Procédé selon la revendication 11, **caractérisé en ce que** concernant les deux unités à membrane (1) et (2), ainsi que les deux unités à membrane (4) et (5), on utilise respectivement une unité à membrane (6) et respectivement (7) avec deux sorties de perméat (6c, 6c') et respectivement (7c, 7c'), procédé d'après lequel le perméat le plus riche en gaz de production, à savoir plus pauvre en gaz d'échappement, des deux perméats, est remis en circuit, sous pression, dans l'unité à membrane (6), et le perméat le plus riche en gaz de production, à savoir plus pauvre en gaz d'échappement, des deux perméats de l'unité à membrane (7) est utilisé en tant que gaz d'alimentation pour l'unité à membrane (6), et d'après lequel du gaz de production est obtenu sous la forme du rétentat des unités à membrane (6) et (7), et du gaz d'échappement sous la forme de l'autre perméat des unités à membrane (6) et (7).

16. Procédé selon la revendication 15, **caractérisé en ce que** le rétentat des unités à membrane (6) et (7) est soutiré en commun en tant que gaz de production.

17. Procédé selon la revendication 15 ou la revendication 16, **caractérisé en ce que** le perméat le plus riche en gaz d'échappement, à savoir plus pauvre en gaz de production, des deux perméats des unités à membrane (6) et (7), est soutiré en commun en tant que gaz d'échappement.

18. Procédé selon l'une des revendications 15 à 17, **caractérisé en ce que** le gaz d'alimentation de l'unité à membrane (7) est également mis sous pression.
